# EUROPEAN PATENT SPECIFICATION

(11) **EP 1 289 373 B1**
(45) Date of publication and mention of the grant of the patent: **22.09.2004**
(21) Application number: 01941299.8
(22) Date of filing: 28.05.2001
(51) Int. Cl.: A22B 3/08, A22B 3/06

(54) **METHOD AND DEVICE FOR STUNNING AND KILLING AQUATIC ANIMALS**
VERFAHREN UND VORRICHTUNG ZUM BETÄUBEN UND SCHLACHTEN VON WASSERTIEREN
PROCEDE ET DISPOSITIF POUR ASSOMMER ET TUER DES ANIMAUX AQUATIQUES

(30) Priority: 25.05.2000 NL 1015306
(43) Date of publication of application: 12.03.2003
(73) Proprietor: NEDERLANDS INSTITUUT VOOR VISSERIJONDERZOEK (RIVO), 1976 CP Ijmuiden (NL)
(72) Inventor: ROBB, David, Henry, Francis, Bristol BS8 3AH (GB); KESTIN, Steven Charles, Langford, Bristol North BS40 5EU (GB); TEJADA YABAR, Margarita, E-28008 Madrid (ES); HUIDOBRO PEREZ-VILLAMIL, Almudena, E-28036 Madrid (ES); KUHLMANN, Holmer, 22397 Hamburg (DE); NESVADBA, Paul, Aberdeen AB15 6AR (GB); SORENSEN, Nils, Kristian, N-9009 Tromso (NO); KLOOSTERBOER, Rika, Johanna, NL-1951 XZ Velsen-Noord (NL); VAN DE VIS, Johannes, Wilhelmus, NL-3524 RE Utrecht (NL); SCHELVIS-SMIT, Adriana, Anna, Maria, NL-1991 BL Velserbroek (NL); OTTERAA, Haakon, N-5096 Bergen (NO); BYRNE, Hazel Joyce Foster, Grandhome Estate, Aberdeen AB22 8AS (GB); AKSE, Leif, Jorgen, N-9018 Tromso (NO); VANCOILLE, Caroline, Godelieve, Anna, Marie, NL-5705 CJ Helmond (NL); VAN RIJSINGEN, Johannes, Cornelis, Maria, NL-5708 BZ Helmond (NL); PIETERSE, Cornelis, NL-3822 VB Amersfoort (NL); LAMBOOIJ, Elbert, NL-8212 EG Lelystad (NL); MUNKNER, Werner, 22767 Hamburg (DE); OEHLENSCHLÄGER, Jörg, 21244 Buchholz (DE)
(74) Representative: 't Jong, Bastiaan Jacob
(86) International application number: PCT/NL2001/000412
(87) International publication number: WO 2001/095732

(56) References cited:
- EP-A- 0 561 470
- DE-U- 29 811 877
- MARX H ET AL: "METHODS OF STUNNING FRESHWATER FISH: IMPACT ON MEAT QUALITY AND ASPECTS OF ANIMAL WELFARE" ZEITSCHRIFT FUER LEBENSMITTEL-UNTERSUCHUNG UND -FORSCHUNG. A, EUROPEAN FOOD RESEARCH AND TECHNOLOGY,DE,SPRINGER, HEIDELBERG, vol. 204, no. 4, 1997, pages 282-286, XP000884022 ISSN: 1431-4630

## Description

The invention relates to a method for stunning and killing an aquatic animal. It relates very particularly, but not exclusively, to fish such as eel and other edible fish. Shellfish such as lobster, crab, prawns, molluscs and the like can also be stunned and killed in appropriate manner with the present invention.

DE-U-29811877 shows a device for stunning and killing fish comprising a water reservoir, an electric power source capable of generating an electric current via electrodes placed in the water tank. The device comprises a control unit, for controlling the current intensity, dependent on the conductance of the water.

It is usual, and in accordance with the relevant legislation, for land animals, in particular animals for slaughter, to be killed in a manner such that no avoidable stress, pain or suffering occurs. For this purpose the animal is stunned and killed before the insensible state has worn off.

The invention now has for its object to provide a method with which an aquatic animal can be killed in such a manner. This objective is achieved according to the invention with the method as defined in claim 1 and with the device as defined in claim 11. Preferred features of the invention are set out in the dependent claims.

Owing to the relatively high electric current during the short first period there occurs immediate loss of consciousness and numbness in the aquatic animal. Brain activity is effectively deactivated.

During the second period the heart activity becomes or remains minimized or disabled. At the same time the conditioning of the water prevents the animal recovering, wherein the muscles involved in respiration either cannot work or can only do so inadequately, so that there occurs a shortage of oxygen in the body of the animal, which will ultimately result in brain death, i.e. the death of the animal.

A suitable embodiment of the method according to the invention is characterized in claim 2. The current intensity which is generated during the second, longer period and which can optionally be intermittent, prevents the animal from recovering.

The measure of claim 3 is preferably applied. This measure is particularly important when the aquatic animal uses skin respiration. The skin respiration will effectively be deactivated by applying oxygen-free water, whereby the total duration of the operation can be limited.

The water is advantageously made oxygen-free by introducing an oxygen-expelling gas therein.

This oxygen-expelling gas is in further preference nitrogen. Nitrogen gas is a gas which is permitted for use in slaughtering animals, so that it is also a suitable type of gas in this case, which moreover results in a rapid expulsion of the oxygen from the water.

According to another favourable embodiment of the method the animal is accommodated in cold water at a maximum of 0°C during at least the second period. The animal hereby remains in stunned state until death occurs.

So as to make the method easily manageable the measure of claim 7 is preferably applied. Owing to the fixing the animal is held fast in a predetermined position, so that the current intensity can be precisely determined.

The fixing preferably takes place by placing the animal in a channel-like element. It is hereby held fast in elongate position at a precisely determined location in the channel-like element.

According to a further development of the method according to the invention the electric current is generated in the animal by generating an electrical field which is at least practically homogeneous. A number of animals simultaneously can hereby be stunned and then killed in one water volume. The required current intensity will be at least practically the same in each case depending on the position in the field.

The magnitude of the first and second current intensity and the duration of the first and second period depend very greatly on the size and nature of the animal.

It has thus been found that for eels a suitable duration of the first period is 1 second and a suitable first current intensity can be obtained at a voltage of about 200 volts. The second period is about 15 minutes here, and the voltage applied so as to reach the second current intensity can herein be 50 volts. Said voltages of 200 and 50 volts can be employed provided the respective current intensities lie in the order of respectively several hundreds and several tens of milliamperes which are carried through the individual animal.

In the case of eels situated in the water, 6.2 milliampere per square centimetre of electrode area is preferably used as first current intensity and 1.4 milliampere is preferably used as second current intensity. These values can be employed provided the electrode area of one of the two electrodes is equal to the area of the bottom of the tank in which the eels are situated for the purpose of carrying out the stunning. The two electrodes are preferably equally large and of the same form.

According to the invention the current intensities and time periods required for a species and size of animal for stunning and killing can suitably be determined experimentally. To this end a scientifically reliable number of animals are subjected to different current intensities and periods, wherein an electroencephalogram (EEG) and/or an electrocardiogram (ECG) of the animal is made, so that the effect can be determined. On the basis of the brain activity recorded using the EEG it is possible to establish whether the animal is unconscious and numb. The occurrence of fibrillation of the heart or complete ceasing of heart activity is determined on the basis of the ECG.

If oxygen-free water is applied, the animals stunned and killed with the method and device according to the invention can be discharged with the water, whereafter new animals can be stunned and killed in fresh water.

## Claims

1. Method for stunning and killing an aquatic animal, comprising of having the animal accommodated in water, connecting a source of electric current to the water such that during a first period an electric current with a first current intensity is generated in the animal such that it is stunned, **characterized by** conditioning the water such that, substantially immediately after such period, the animal remains stunned in said water during a second period.

2. Method as claimed in claim 1, wherein during the second period an electric current with a second current intensity is generated in the animal, wherein the second current intensity is lower than the first and the second period is longer than the first.

3. Method as claimed in claim 1 or 2, wherein the animal is accommodated in substantially oxygen-free water in at least the second period.

4. Method as claimed in claim 3, wherein the water is made substantially oxygen-free by introducing an oxygen-expelling gas therein.

5. Method as claimed in claim 4, wherein the gas is nitrogen.

6. Method as claimed in claim 1 or 2, wherein the animal is accommodated in cold water at a maximum of 0°C during at least the second period.

7. Method as claimed in any of the foregoing claims, wherein the animal is fixed.

8. Method as claimed in claim 7, wherein the animal is fixed by being placed in a channel-like element.

9. Method as claimed in any of the foregoing claims, wherein the electric current is generated in the animal by generating an electrical field, which field is at least practically homogeneous.

10. Method as claimed in any of the foregoing claims, wherein the magnitude of the first and second current intensity and the duration of the first and second period are determined experimentally with an animal representative of a number of animals for stunning and killing.

11. Device for stunning and killing aquatic animals, comprising a water reservoir, an electric power source which is connected to the reservoir by electrodes, and means for generating electric current with a defined current intensity in the water reservoir via the electrodes, **characterized by** switching means for switching the means for generating an electric current from a first current intensity during a first period, to a second current intensity during a second period.

12. Device as claimed in claim 11, further comprising gas feed means for feeding a gas into the water reservoir.

13. Device as claimed in claim 11 or 12, comprising at least one channel-like element for fixing at least one animal.

## Patentansprüche

1. Verfahren zum Betäuben und Schlachten eines Wassertieres mit den Schritten:
Unterbringen des Tieres in Wasser,
Verbinden einer Quelle elektrischen Stroms mit dem Wasser so, daß während einer ersten Periode ein elektrischer Strom mit einer ersten Stromintensität in dem Tier derart erzeugt wird, daß es betäubt wird,
**dadurch gekennzeichnet, daß**
das Wasser so aufbereitet wird, daß im wesentlichen unmittelbar nach einer derartigen Periode das Tier in dem Wasser während einer zweiten Periode betäubt bleibt.

2. Verfahren nach Anspruch 1, wobei während der zweiten Periode ein elektrischer Strom mit einer zweiten Stromstärke in dem Tier erzeugt wird, wobei die zweite Stromintensität niedriger als die erste ist, und die zweite Periode länger als die erste ist.

3. Verfahren nach Anspruch 1 oder 2, wobei das Tier in im wesentlichen sauerstofffreiem Wasser wenigstens in der zweiten Periode untergebracht wird.

4. Verfahren nach Anspruch 3, wobei das Wasser im wesentlichen sauerstofffrei gemacht wird, indem ein Sauerstoff austreibendes Gas darin eingebracht wird.

5. Verfahren nach Anspruch 4, wobei das Gas Stickstoff ist.

6. Verfahren nach Anspruch 1 oder 2, wobei das Tier in kaltem Wasser von maximal 0°C wenigstens während der zweiten Periode untergebracht wird.

7. Verfahren nach einem der vorstehenden Ansprüche, wobei das Tier fixiert wird.

8. Verfahren nach Anspruch 7, wobei das Tier fixiert wird, indem es in einem kanalartigen Element plaziert wird.

9. Verfahren nach einem der vorstehenden Ansprüche, wobei der elektrische Strom in dem Tier durch Erzeugen eines elektrischen Feldes erzeugt wird, welches wenigstens praktisch homogen ist.

10. Verfahren nach einem der vorstehenden Ansprüche, wobei die Größe der ersten und zweiten Stromintensität und die Dauer der ersten und zweiten Periode experimentell mit einem Tier ermittelt werden, das für eine Anzahl von Tieren zum Betäuben und Schlachten repräsentativ ist.

11. Vorrichtung zum Betäuben und Schlachten von Wassertieren, mit einem Wasserbehälter, einer elektrischer Energiequelle, welche mit dem Wasserbehälter über Elektroden verbunden ist, und einer Einrichtung zum Erzeugen von elektrischem Strom mit einer definierten Stromintensität in dem Wasserbehälter über die Elektroden,
**gekennzeichnet durch**
eine Umschalteinrichtung zum Umschalten der Einrichtung zum Erzeugen eines elektrischen Stroms mit einer ersten Stromintensität während einer ersten Periode auf eine zweite Stromintensität während einer zweiten Periode.

12. Vorrichtung nach Anspruch 11, ferner mit einer Gaszuführungseinrichtung zum Einführen eines Gases in den Wasserbehälter.

13. Vorrichtung nach Anspruch 11 oder 12, mit wenigstens einem kanalartigen Element zum Fixieren wenigstens eines Tieres.

## Revendications

1. Procédé pour assommer et tuer un animal aquatique, comprenant des étapes consistant à disposer l'animal installé dans de l'eau, relier une source de courant électrique à l'eau de sorte que durant une première période, un courant électrique ayant une première intensité de courant est engendrée dans l'animal de façon à l'assommer,
**caractérisé par** un conditionnement de l'eau de façon telle que, pratiquement immédiatement après une telle période, l'animal reste assommé dans ladite eau durant une seconde période.

2. Procédé selon la revendication 1, dans lequel durant la seconde période un courant électrique ayant une seconde intensité de courant est engendré dans l'animal, la seconde intensité de courant étant inférieure à la première et la seconde période étant plus longue que la première.

3. Procédé selon la revendication 1 ou 2, dans lequel l'animal est installé dans une eau pratiquement sans oxygène dans au moins la seconde période.

4. Procédé selon la revendication 3, dans lequel l'eau est rendue pratiquement sans oxygène en introduisant dans celle-ci un gaz chassant l'oxygène.

5. Procédé selon la revendication 4, dans lequel le gaz est de l'azote.

6. Procédé selon la revendication 1 ou 2, dans lequel l'animal est installé dans de l'eau froide à un maximum de 0°C durant au moins la seconde période.

7. Procédé selon l'une quelconque des revendications précédentes, dans lesquelles l'animal est fixé.

8. Procédé selon la revendication 7, dans lequel l'animal est fixé en étant placé dans un élément en forme de canal.

9. Procédé selon l'une quelconque des revendications précédentes, dans lequel le courant électrique est engendré dans l'animal en engendrant un champ électrique, ledit champ étant au moins en pratique homogène.

10. Procédé selon l'une quelconque des revendications précédentes, dans lequel la magnitude desdites première et seconde intensités de courant et la durée desdites première et seconde périodes sont déterminées expérimentalement avec un animal représentatif d'un certain nombre d'animaux destinés à être assommés et tués.

11. Dispositif pour assommer et tuer des animaux aquatiques, comprenant un réservoir d'eau, une source d'alimentation électrique qui est reliée au réservoir par des électrodes, et des moyens pour engendrer un courant électrique avec une intensité de courant déterminée dans le réservoir d'eau par l'intermédiaire des électrodes,
**caractérisé par** des moyens de commutation permettant de commuter les moyens pour engendrer un courant électrique d'une première intensité de courant durant un première période à une seconde intensité de courant durant une seconde période.

12. Dispositif selon la revendication 11, comprenant en outre des moyens de fourniture de gaz pour fournir un gaz à l'intérieur du réservoir d'eau.

13. Dispositif selon la revendication 11 ou 12, comprenant au moins un élément en forme de canal pour fixer au moins un animal.
